# FASCICULE DE BREVET EUROPEEN

(11) **EP 1 912 299 B1**
(45) Date de publication et mention de la délivrance du brevet: **15.05.2013**
(21) Numéro de dépôt: 07356116.9
(22) Date de dépôt: 03.09.2007
(51) Int. Cl.: H02B 1/052

(54) **Appareil électrique, destiné à être fixé sur un rail support, et procédé de montage correspondant**
Elektrisches Gerät, das zur Befestigung auf einer Stützschiene vorgesehen ist, und entsprechendes Montageverfahren
Electrical appliance destined to be fixed to a support rail and corresponding assembly method

(30) Priorité: 13.10.2006 FR 0609005
(43) Date de publication de la demande: 16.04.2008
(73) Titulaire: ABB France, 91978 Courtaboeuf Cedex (FR)
(72) Inventeur: Nguyen, Eric, 42000 Saint Etienne (FR)
(74) Mandataire: Verriest, Philippe

(56) Documents cités:
- EP-A1- 0 061 664
- EP-A1- 1 713 099

## Description

L'invention concerne un appareil électrique, destiné à être fixé sur un rail support, ainsi qu'un procédé de montage correspondant.

Les appareils électriques sont généralement fixés par l'intermédiaire de rail normalisés, appelés rails DIN, dans une armoire électrique.

Selon un mode de réalisation connu, **notamment du document** EP 0 061 664, un appareil électrique, comporte un corps équipé de moyens de verrouillage sur le rail comprenant au moins une patte mobile entre une position de verrouillage et une position de déverrouillage, destinée à coopérer avec un premier bord du rail, la patte étant soumise à l'action d'un élément élastique disposé dans un logement du corps et prenant appui sur celui-ci ainsi que sur la patte mobile. Le document EP 1 713 099 décrit un dispositif selon le préambule de la revendication 1.

Afin de permettre un montage et un démontage facile, c'est-à-dire sans nécessiter d'outil, de l'appareil électrique sur le rail de guidage, l'appareil électrique comporte généralement un élément élastique de structure complexe ou un élément de type ressort.

Or, le montage de ce type d'élément élastique est difficile à réaliser, ce qui augmente sensiblement les coûts de fabrication de l'appareil électrique.

L'invention vise donc à remédier à ces inconvénients en proposant un appareil électrique qui soit facile à assembler et de coût faible, tout en permettant son démontage facile du rail support.

A cet effet, l'invention concerne un appareil électrique du type précité, caractérisé en ce que l'élément élastique est de forme allongée, sensiblement rectiligne en position de repos, le logement comportant une ouverture d'introduction de l'élément élastique, disposée sensiblement suivant le même axe que celui de l'élément élastique en position de repos et débouchant vers l'extérieur du corps, sur la face latérale du corps perpendiculaire à l'axe longitudinal du rail.

Ainsi, l'élément élastique peut être facilement monté dans le corps de l'appareil électrique, plus précisément dans le logement prévu à cet effet, par l'intermédiaire de l'ouverture d'introduction.

Avantageusement, le logement du corps comporte deux zones d'appui de l'élément élastique, décalées selon l'axe de celui-ci en position de repos.

Préférentiellement, la patte comporte une ouverture de passage de l'élément élastique.

Selon une forme de réalisation de l'invention, l'ouverture de passage de la patte mobile comporte au moins une zone de guidage présentant au moins une paroi inclinée dans le sens d'insertion de l'élément élastique.

Selon une caractéristique de l'invention, l'élément élastique est une tige de forme sensiblement cylindrique.

Ce type d'élément élastique est peu complexe, donc peu onéreux à réaliser, tout en offrant les caractéristiques d'élasticité nécessaire au verrouillage de l'appareil électrique sur le rail.

L'invention concerne en outre un procédé d'assemblage d'un appareil électrique selon l'invention, caractérisé en ce qu'il comporte les étapes suivantes :
- déplacement de la patte mobile à l'encontre de sa force élastique de rappel, dans une position de montage dans laquelle la patte ne forme pas obstacle à l'insertion de l'élément élastique,
- insertion de l'élément élastique,
- relâchement de la patte mobile qui prend appui contre l'élément élastique.

De toute façon, l'invention sera bien comprise à l'aide de la description qui suit, en référence au dessin schématique annexé représentant, à titre d'exemples non limitatifs, plusieurs formes d'exécution de cet appareil électrique.

Figure 1 est une vue en perspective, de dessous, de l'appareil électrique selon l'invention ;

Figure 2 en est une vue en perspective, de dessus.

Figure 3 et 4 sont des vues agrandies, en coupe partielle selon l'axe B, représentant la fixation de l'appareil électrique sur le rail.

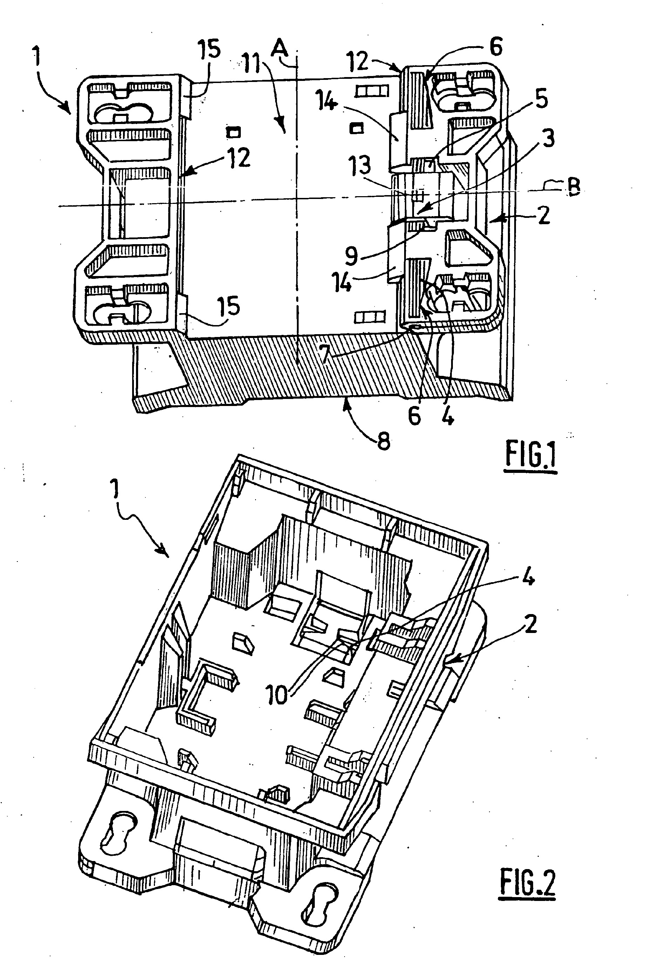

Les figures 1 et 2 représente un appareil électrique 1, en particulier un contacteur, destiné à être fixé sur un rail support (non représenté) et comportant un corps 2 de forme sensiblement parallélépipédique et formant une cuve débouchant vers l'extérieur au niveau de sa face supérieure, comme cela apparaît en figure 2, la cuve étant destinée à accueillir des éléments électriques (non représentés), de manière connue en soi.

Le corps 2 est équipé, au niveau de sa face inférieure, de moyens de verrouillage sur le rail comprenant au moins une patte mobile 3 entre une position de verrouillage et une position de déverrouillage, destinée à coopérer avec un premier bord du rail. La patte 3 est soumise à l'action d'un élément élastique 4 disposé dans un logement 5 du corps 2 et prenant appui sur celui-ci ainsi que sur la patte mobile 3.

L'élément élastique 4 se présente sous la forme d'une tige qui est sensiblement rectiligne en position de repos, c'est-à-dire lorsqu'elle n'est soumise à aucune contrainte extérieure.

L'élément élastique 4 prend appui, au niveau de chaque extrémité, sur une zone d'appui 6 du logement 5.

Le logement 5 comporte en outre une ouverture d'introduction 7 de l'élément élastique 4, disposée sensiblement suivant le même axe que celui de l'élément élastique 4 en position de repos et débouchant vers l'extérieur du corps 2, sur une face latérale 8 du corps 2 perpendiculaire à l'axe longitudinal A du rail.

La patte mobile 3 vient de moulage avec le corps 2 et comporte au moins une zone élastique permettant son déplacement ainsi qu'une ouverture de passage 9 de l'élément élastique 4, également disposée selon l'axe de l'élément élastique 4 en position de repos. Celle-ci comporte une zone de guidage présentant deux parois inclinées 10 en regard l'une de l'autre et convergeant en direction de l'axe précité dans le sens d'introduction de l'élément élastique 4.

Ces deux parois inclinées 10 sont espacées, au niveau de leur extrémité rapprochée, d'une distance correspondant sensiblement au diamètre de l'élément élastique 4.

Ainsi, afin de réaliser l'insertion de l'élément élastique 4 dans le logement 5 du corps 2, l'opérateur déplace tout d'abord la patte mobile 3 à l'encontre de sa force de rappel dans une position de montage dans laquelle celle-ci ne s'oppose pas à l'insertion de l'élément élastique 4. Cette position de montage est définie plus précisément par la position dans laquelle l'ouverture de passage 9 de la patte mobile 3 est située dans l'axe d'insertion de l'élément élastique 4, en regard de l'ouverture 7.

L'opérateur insère ensuite l'élément élastique 4 dans le logement 5, par l'intermédiaire de l'ouverture 7, puis relâche la patte mobile 3.

Le corps 2 défini une zone de fixation du rail délimitée par une surface d'appui 11, parallèle à la surface inférieure du corps et décalée en direction de la surface supérieure, et par deux surfaces latérales 12 s'étendant depuis la face d'appui 11 jusqu'à la surface inférieure du corps.

Une première surface latérale 11, disposée du côté du premier bord d'appui du rail en contact avec la patte mobile 3, est ajourée de manière à permettre le passage de la patte mobile 3.

Selon une possibilité de l'invention, cette dernière peut comporter une paroi 13 inclinée ou bombée de manière à faciliter la mise en place de l'appareil électrique 1 sur le rail, comme cela est décrit plus en détail ci-après.

Les moyens de verrouillage comprennent deux pattes fixes 14, disposées de part et d'autre de la patte mobile 3 et destinées à coopérer avec le premier bord du rail.

La seconde paroi latérale 12, disposée en regard de la première 11, comporte deux pattes fixes 15, destinées à coopérer avec le second bord du rail.

En outre, chacune des pattes fixes 14 et 15 est disposée de manière à définir un espace de hauteur sensiblement égale à l'épaisseur du bord correspondant du rail.

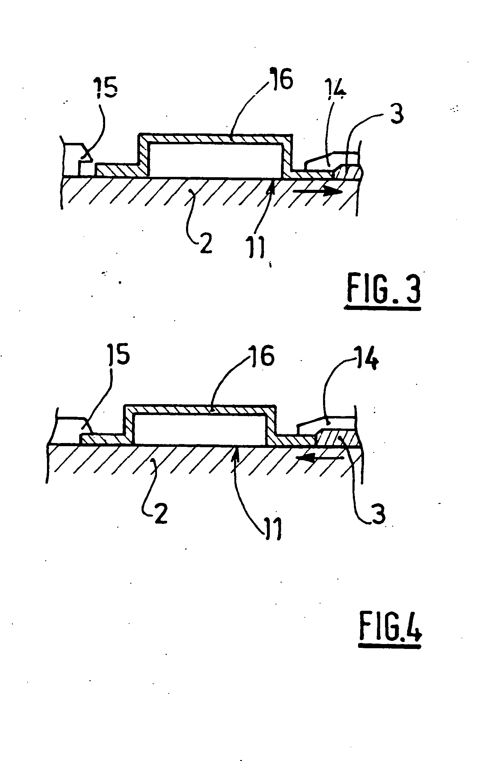

Ainsi, comme représenté en figure 3, lors de la fixation de l'appareil électrique 1 sur le rail 16, l'opérateur insère tout d'abord le premier bord du rail 16 entre les pattes rigides 14 et la surface d'appui 11 puis exerce une pression à l'encontre de la patte mobile 3, de sorte que celle-ci s'écarte de la zone de fixation du rail 16.

Comme représenté en figure 4, l'opérateur relâche le corps 2 lorsque la surface d'appui 11 du corps est en appui contre le rail. La patte mobile 3, dont l'extrémité d'appui exerce une force contre le premier bord du rail 16, repousse alors le second bord du rail 16 sous les pattes fixes 15.

De manière préférentielle, un godron ou élément en saillie 17 est ménagé sur la surface d'appui 11, de manière à venir repousser le premier bord du rail 16 contre les pattes 14 dans la direction orthogonale à la surface d'appui 11, de manière à favoriser le maintien de l'appareil électrique sur le rail.

Le retrait de l'appareil électrique peut être réalisé simplement, en déplaçant manuellement la patte mobile 3 jusqu'à sa position de déverrouillage puis en retirant l'appareil électrique 1.

Comme il va de soi, l'invention ne se limite pas aux seules formes d'exécution de ce système, décrites ci-dessus à titre d'exemple, mais elle embrasse au contraire toutes les variantes, selon les revendications.

## Revendications

1. Appareil électrique (1), destiné à être fixé sur un rail support, comportant un corps (2) équipé de moyens de verrouillage sur le rail comprenant au moins une patte mobile (3) entre une position de verrouillage et une position de déverrouillage, destinée à coopérer avec un premier bord du rail, la patte (3) étant soumise à l'action d'un élément élastique (4) disposé dans un logement (5) du corps (2) et prenant appui sur celui-ci ainsi que sur la patte mobile (3),
l'élément élastique (4) étant de forme allongée, sensiblement rectiligne en position de repos, **caractérisé en ce que** le logement (5) comporte une ouverture d'introduction (7) de l'élément élastique (4), disposée sensiblement suivant le même axe que celui de l'élément élastique en position de repos et débouchant vers l'extérieur du corps (2), sur la face latérale (8) du corps perpendiculaire à l'axe longitudinal (A) du rail.

2. Appareil électrique selon la revendication 1, **caractérisé en ce que** le logement (5) du corps (2) comporte deux zones d'appui (6) de l'élément élastique (4), décalées selon l'axe de celui-ci en position de repos.

3. Appareil électrique selon l'une des revendications 1 et 2, **caractérisé en ce que** la patte mobile (3) comporte une ouverture (9) de passage de l'élément élastique (4).

4. Appareil électrique selon l'une des revendications 1 à 3, **caractérisé en ce que** l'ouverture (9) de passage de la patte mobile (3) comporte au moins une zone de guidage présentant au moins une paroi inclinée (10) dans le sens d'insertion de l'élément élastique (4).

5. Appareil électrique selon l'une des revendications 1 à 4, **caractérisé en ce que** l'élément élastique (4) est une tige de forme sensiblement cylindrique.

6. Procédé d'assemblage d'un appareil électrique selon l'une des revendications 1 à 5, **caractérisé en ce qu'**il comporte les étapes suivantes :
- déplacement de la patte mobile (3) à l'encontre de sa force élastique de rappel dans une position de montage dans laquelle la patte (3) ne forme pas obstacle à l'insertion de l'élément élastique (4),
- insertion de l'élément élastique (4),
- relâchement de la patte mobile (3) qui prend appui contre l'élément élastique (4).

## Patentansprüche

1. Elektrisches Gerät (1), das zur Befestigung auf einer Stützschiene vorgesehen ist, das einen Körper (2) aufweist, der mit Verriegelungsmitteln auf der Schiene ausgestattet ist, die mindestens eine zwischen einer Verriegelungsstellung und einer Entriegelungsstellung bewegliche Lasche (3) umfassen, die dazu bestimmt ist, mit einem ersten Rand der Schiene zusammenzuarbeiten, wobei die Lasche (3) der Wirkung eines elastischen Elements (4) ausgesetzt ist, das in einer Aufnahme (5) des Körpers (2) angeordnet ist und sich sowohl auf diesem als auch auf der beweglichen Lasche (3) abstützt,
wobei das elastische Element (4) eine längliche, in Ruhestellung etwa gerade Form hat, **dadurch gekennzeichnet, dass** die Aufnahme (5) eine Einführöffnung (7) des elastischen Elements (4) aufweist, die etwa gemäß derselben Achse wie die des elastischen Elements in Ruhestellung angeordnet ist und auf der Seitenfläche (8) des Körpers (2) senkrecht zur Längsachse (A) der Schiene in Richtung der Außenwelt des Körpers (2) mündet.

2. Elektrisches Gerät nach Anspruch 1, **dadurch gekennzeichnet, dass** die Aufnahme (5) des Körpers (2) zwei Abstützzonen (6) des elastischen Elements (4) aufweist, die gemäß der Achse desselben in Ruhestellung versetzt sind.

3. Elektrisches Gerät nach einem der Ansprüche 1 und 2, **dadurch gekennzeichnet, dass** die bewegliche Lasche (3) eine Durchgangsöffnung (9) des elastischen Elements (4) aufweist.

4. Elektrisches Gerät nach einem der Ansprüche 1 bis 3, **dadurch gekennzeichnet, dass** die Durchgangsöffnung (9) der beweglichen Lasche (3) mindestens einen Führungsbereich aufweist, der mindestens eine in Richtung des Einsetzens des elastischen Elements (4) geneigte Wand (10) aufweist.

5. Elektrisches Gerät nach einem der Ansprüche 1 bis 4, **dadurch gekennzeichnet, dass** das elastische Element (4) eine etwa zylindrische Stange ist.

6. Montageverfahren eines elektrischen Geräts nach einem der Ansprüche 1 bis 5, **dadurch gekennzeichnet, dass** es die folgenden Schritte umfasst:
- Verlagerung der beweglichen Lasche (3) gegen ihre elastische Rückstellkraft in eine Montageposition, in der die Lasche (3) das Einführen des elastischen Elements (4) nicht behindert,
- Einführen des elastischen Elements (4),
- Loslassen der beweglichen Lasche (3), die sich auf dem elastischen Element (4) abstützt.

## Claims

1. An electric appliance (1), intended to be attached on a supporting rail, including a body (2) equipped with locking means on the rail comprising at least one mobile tab (3) between a locking position and an unlocking position, intended to cooperate with a first edge of the rail, the tab (3) being subject to the action of an elastic element (4) positioned in a housing (5) of the body (2) and bearing upon the latter as well as on the mobile tab (3),
the elastic element (4) being of a substantially rectilinear elongated shape in the rest position, **characterized in that** the housing (5) includes an aperture (7) for introducing the elastic element (4), substantially positioned along the same axis as the one of the elastic element in the rest position and opening out towards the outside of the body (2), on the lateral face (8) of the body perpendicular to the longitudinal axis (A) of the rail.

2. The electric appliance according to claim 1, **characterized in that** the housing (5) of the body (2) includes two supporting areas (6) of the elastic element (4), shifted along the axis of the latter in the rest position.

3. The electric appliance according to one of claims 1 and 2, **characterized in that** the mobile tab (3) includes an aperture (9) for letting through the elastic element (4).

4. The electric appliance according to one of claims 1 to 3, **characterized in that** the aperture (9) for letting through the mobile tab (3) includes at least one guiding area having at least one wall (10) tilted in the direction for inserting the elastic element (4).

5. The electric appliance according to one of claims 1 to 4, **characterized in that** the elastic element (4) is a rod with a substantially cylindrical shape.

6. A method for assembling an electric appliance according to one of claims 1 to 5, **characterized in that** it includes the following steps:
- displacing the mobile tab (3) against its elastic return force into a mounting position in which the tab (3) does not form an obstacle to the insertion of the elastic element (4),
- inserting the elastic element (4),
- releasing the mobile tab (3) which bears against the elastic element (4).
